# EUROPÄISCHE PATENTSCHRIFT

(11) **EP 1 817 961 B1**
(45) Veröffentlichungstag und Bekanntmachung des Hinweises auf die Patenterteilung: **14.01.2009**
(21) Anmeldenummer: 06007144.6
(22) Anmeldetag: 04.04.2006
(51) Int. Cl.: A22B 3/00, A22C 21/00

(54) **Verfahren zum tierschutzgerechten Töten von Vögeln**
Method of humanely killing birds
Méthode pour tuer des animaux

(30) Priorität: 10.02.2006 DE 102006006278
(43) Veröffentlichungstag der Anmeldung: 15.08.2007
(73) Patentinhaber: Linde Aktiengesellschaft, 80807 München (DE)
(72) Erfinder: Däbritz, Peter, 22559 Hamburg (DE); Meyer, Ralf, 21465 Wentorf (DE); Weidgen, Sönke, 22049 Hamburg (DE)
(74) Vertreter: Gellner, Bernd

(56) Entgegenhaltungen:
- EP-A- 0 434 279
- DK-A- 113 295
- FR-A- 2 578 390
- US-A- 3 356 087
- US-A- 4 107 818

## Beschreibung

Die Erfindung betrifft ein Verfahren zum tierschutzgerechten Töten von Tieren, insbesondere Vögeln, wobei die Tiere an ihrem Aufbewahrungsort einer Kohlendioxid-Atmosphäre ausgesetzt werden und wobei dem Aufbewahrungsort flüssiges Kohlendioxid zugeführt wird.

Zur Verhinderung einer weiteren Ausbreitung von Tierseuchen ist es teilweise unumgänglich, die infizierten Tiere zu töten. So werden derzeit beispielsweise in Gebieten, in denen die Vogelgrippe ausgebrochen ist, Massentötungen von Vögeln und Geflügel durchgeführt.

Die Tötung der Tiere erfolgt zum Teil mit Hilfe mobiler Elektrotötungsanlagen. Hierbei werden die Vögel kopfüber in eine Art Fließband gehängt und durch ein unter Strom gesetztes Wasserbad gezogen. Dieses Verfahren ist jedoch relativ aufwändig und setzt die Vögel einem nicht unerheblichen Stress aus.

Es sind auch Verfahren bekannt, bei denen die Vögel mit Gas getötet werden. Kohlendioxid ist hierbei das Mittel der Wahl. Die Tiere werden durch das Kohlendioxid innerhalb weniger Sekunden betäubt. Nach wenigen Minuten tritt dann der Tod ein.

Im Stand der Technik werden die Vögel in Behälter eingebracht, in die anschließend Kohlendioxid eingeleitet wird. Das Kohlendioxid wird im gasförmigen Zustand Kohlendioxid-Gasflaschen oder Flaschenbündeln entnommen. Sollen große Mengen an Tieren getötet werden, so wird teilweise auch flüssiges Kohlendioxid in großen Verdampfern mit Verdampfungsleistungen von beispielsweise 10000 m³/h verdampft und dann in die Behälter mit den Vögeln geleitet.

Zur gleichzeitigen Tötung einer großen Anzahl von Tieren ist es nötig, schnell große Mengen Kohlendioxid zur Verfügung zu stellen. Dies ist bei einer Kohlendioxid-Versorgung über Gasflaschen praktisch nicht möglich, bei einer Versorgung durch Verdampfung flüssigen Kohlendioxids sind entsprechend große Verdampfer notwendig.

Aus der DK 113295A ist ein Verfahren zum Töten von Tieren bekannt, wobei die Tiere in einer Grube einer CO2-Atmosphäre ausgesetzt werden und wobei der Grube flüssiges CO2 zugeführt wird.

Aufgabe vorliegender Erfindung ist es, ein Verfahren aufzuzeigen, mit dem in kurzer Zeit große Mengen Kohlendioxid zur möglichst schonenden Tötung von Tieren, insbesondere von Geflügel, bereitgestellt werden können.

Diese Aufgabe wird durch ein Verfahren gemäß den Merkmalen von Anspruch 1 gelöst.

Die Erfindung stellt ein Verfahren zum tierschutzgerechten Töten von Tieren, insbesondere Vögeln, zur Verfügung. Das erfindungsgemäße Verfahren erlaubt es, eine große Anzahl an Tieren schnell und schonend zu töten. Hierzu ist es nötig, dass alle Tiere innerhalb kurzer Zeit der Kohlendioxid-Atmosphäre ausgesetzt werden. Dies wird erfindungsgemäß dadurch gelöst, dass das Kohlendioxid in flüssiger Form dem Aufbewahrungsort der Tiere zugeführt wird. Das flüssige Kohlendioxid wird fein versprüht, verdampft dabei und bildet die erst betäubende, dann Tod bringende Kohlendioxid-Atmosphäre.

Kohlendioxid ist schwerer als Luft und sammelt sich am Boden eines Behälters oder Raumes an. Der Aufbewahrungsort sollte daher, um den Kohlendioxid-Bedarf möglichst niedrig zu halten, in dessen unterem Bereich so dicht sein, dass kein oder nur wenig Kohlendioxid entweichen kann.

Wenn im Notfall eine Massentötung von Tieren unumgänglich ist, wird das flüssige Kohlendioxid direkt in den Stall mit den Tieren gesprüht. Auf diese Weise müssen die Tiere nicht erst in spezielle Behälter oder Kammern verbracht oder umgesetzt werden. Dadurch wird zum einen der Aufwand für die Tötung der Tiere verringert, zum anderen werden die Tiere keinem zusätzlichen Stress ausgesetzt.

Das flüssige Kohlendioxid wird vorzugsweise in den Aufbewahrungsort gesprüht. Beim Einsprühen des Kohlendioxid in den Stall erfolgt eine feine Verteilung des Kohlendioxid, bei der das Kohlendioxid verdampft. Durch diese Feinverdüsung können große Mengen gasförmigen Kohlendioxids zugeführt werden, ohne dass spezielle Verdampfer nötig wären.

Bei Umgebungsdruck kommt Kohlendioxid nur in den Aggregatszuständen gasförmig und fest vor. Wird flüssiges Kohlendioxid über eine Zuleitung einem Sprührohr mit Austrittsöffnungen zugeführt und bei einem Druck unterhalb von dessen Tripelpunkt entspannt, bildet sich ein Gemisch aus festem Kohlendioxidschnee und gasförmigem Kohlendioxid. Hierbei besteht die Gefahr, dass entstehender Kohlendioxidschnee die Zuleitung zum Sprührohr verstopft.

Von Vorteil wird daher die Zuleitung zum Sprührohr vor der Einleitung des flüssigen Kohlendioxids mit gasförmigem Kohlendioxid vorgespannt, das heißt auf einen Druck oberhalb des Umgebungsdrucks gebracht. Wenn der Druck in der Zuleitung 5,2 bar überschritten hat, kann flüssiges Kohlendioxid in die Zuleitung gegeben werden, ohne dass eine Schneebildung zu befürchten ist. Um eventuellen Druckunterschieden innerhalb der Zuleitung Rechnung zu tragen, erfolgt die Umschaltung auf flüssiges Kohlendioxid bevorzugt bei einem Druck von mehr als 5,5 bar, besonders bevorzugt bei einem Druck von mehr als 6 bar.

Der Druckaufbau in der Zuleitung wird bevorzugt dadurch erreicht, dass der Gesamtquerschnitt aller Austrittsöffnungen des Sprührohres geringer als der Querschnitt der Zuleitung ausgeführt ist. Bei Zufuhr von gasförmigem Kohlendioxid in die Zuleitung wird so der gewünschte Druckanstieg in der Zuleitung erzielt.

Bei der Entspannung des flüssigen Kohlendioxids in den Aufbewahrungsort entsteht ein Gemisch aus gasförmigem und festem Kohlendioxid. Für das erfindungsgemäße Verfahren ist nur der gasförmige Anteil relevant. Von Vorteil wird das flüssige Kohlendioxid daher über Austrittsöffnungen in den Aufbewahrungsort entspannt, die einen Durchmesser von weniger als 3 mm, bevorzugt weniger als 2 mm, besonders bevorzugt zwischen 1 und 1,5 mm, besitzen. Es hat sich gezeigt, dass bei einem Eindüsen des flüssigen Kohlendioxids durch Austrittsöffnungen dieser Größe eine feine Verteilung der bei der Entspannung des flüssigen Kohlendioxids entstehenden Schneekristalle erreicht und der Wärmeübergang von der umgebenden Luft auf die Schneekristalle verbessert wird. Die Schneekristalle sublimieren so sehr schnell zu Kohlendioxidgas. Der Anteil an Kohlendioxidschnee wird auf diese Weise auf ein Minimum begrenzt.

Die Erfindung eignet sich insbesondere zur schnellen und schonenden Massentötung von Vögeln und Geflügel. Ein Tankwagen mit flüssigem Kohlendioxid, ein Sprührohr und geeignete Zuleitungen können erfindungsgemäß als mobile Tötungsanlage dienen.

Im Kohlendioxidtank des Tankwagens ist beispielsweise flüssiges Kohlendioxid unter einem Druck zwischen 10 und 20 bar gespeichert. An den Kohlendioxidtank wird die Zuleitung mit dem Sprührohr angeschlossen. Die Gesamtquerschnittsfläche der Austrittsöffnungen des Sprührohres ist dabei kleiner als der Querschnitt der Zuleitung. Das Sprührohr wird in den Aufbewahrungsort, beispielsweise den Stall, der zu tötenden Tiere gerichtet. Zunächst wird aus der Gasphase des Kohlendioxidtanks gasförmiges Kohlendioxid der Zuleitung zugeführt. Aufgrund des geringen Querschnitts der Austrittsöffnungen zwischen 1 und 1,5 mm steigt der Druck in der Zuleitung an. Nach Erreichen des Tripeldruckes von Kohlendioxid wird am Tankwagen auf Flüssigentnahme umgestellt, das heißt flüssiges Kohlendioxid wird in die Zuleitung geleitet.

Das flüssige Kohlendioxid tritt über die Austrittsöffnungen aus dem Sprührohr aus und wird in dem Stall fein verdüst. Dabei verdampft das Kohlendioxid schlagartig und bildet eine Kohlendioxidatmosphäre, die innerhalb von Sekunden das Geflügel betäubt. Die Kohlendioxidatmosphäre in dem Stall bzw. dem Aufbewahrungsort wird dann für einige Minuten aufrechterhalten, bis bei allen Vögeln der Tod eingetreten ist.

## Patentansprüche

1. Verfahren zum tierschutzgerechten Töten von Tieren, insbesondere Vögeln, wobei die Tiere an ihrem Aufbewahrungsort einer Kohlendioxid-Atmosphäre ausgesetzt werden, wobei dem Aufbewahrungsort flüssiges Kohlendioxid zugeführt wird, **dadurch gekennzeichnet, dass** das flüssige Kohlendioxid einem Stall zugeführt wird.

2. Verfahren nach Anspruch 1, **dadurch gekennzeichnet, dass** das flüssige Kohlendioxid in den Aufbewahrungsort gesprüht wird.

3. Verfahren nach einem der Ansprüche 1 oder 2, **dadurch gekennzeichnet, dass** das flüssige Kohlendioxid über eine Zuleitung einem Sprührohr mit Austrittsöffnungen zugeführt wird, wobei in die Zuleitung zunächst solange gasförmiges Kohlendioxid eingeleitet wird, bis der Druck in der Zuleitung mehr als 5,2 bar, vorzugsweise mehr als 5,5 bar, besonders bevorzugt mehr als 6 bar, beträgt.

4. Verfahren nach Anspruch 3, **dadurch gekennzeichnet, dass** der Gesamtquerschnitt aller Austrittsöffnungen des Sprührohres geringer als der Querschnitt der Zuleitung ist.

5. Verfahren nach einem der Ansprüche 3 oder 4, **dadurch gekennzeichnet, dass** die Austrittsöffnungen einen Durchmesser von weniger als 3 mm, bevorzugt weniger als 2 mm, besonders bevorzugt zwischen 1 und 1,5 mm, besitzen.

## Claims

1. Method of humanely killing animals, in particular birds, wherein the animals are exposed to a carbon dioxide atmosphere at their holding site, wherein liquid carbon dioxide is fed to the holding site, **characterized in that** the liquid carbon dioxide is fed to a pen.

2. Method according to Claim 1, **characterized in that** the liquid carbon dioxide is sprayed into the holding site.

3. Method according to either of Claims 1 or 2, **characterized in that** the liquid carbon dioxide is fed via a feedline to a spraying tube having exit orifices, wherein gaseous carbon dioxide is first introduced into the feedline until the pressure in the feedline is greater than 5.2 bar, preferably greater than 5.5 bar, particularly preferably greater than 6 bar.

4. Method according to Claim 3, **characterized in that** the total cross section of all exit orifices of the spraying tube is less than the cross section of the feedline.

5. Method according to either of Claims 3 or 4, **characterized in that** the exit orifices have a diameter of less than 3 mm, preferably less than 2 mm, particularly preferably between 1 and 1.5 mm.

## Revendications

1. Procédé pour tuer des animaux, en particulier des oiseaux, de manière douce, les animaux étant exposés sur le site d'élevage, à une atmosphère de dioxyde de carbone, du dioxyde de carbone liquide étant acheminé au site d'élevage,
**caractérisé en ce que**
le dioxyde de carbone fluide est acheminé à une étable.

2. Procédé selon la revendication 1, **caractérisé en ce que** le dioxyde de carbone fluide est pulvérisé dans le site d'élevage.

3. Procédé selon l'une quelconque des revendications 1 ou 2, **caractérisé en ce que** le dioxyde de carbone fluide est acheminé par le biais d'une conduite d'amenée à un tube de pulvérisation avec des ouvertures de sortie, du dioxyde de carbone gazeux étant d'abord introduit dans la conduite d'amenée jusqu'à ce que la pression dans la conduite d'amenée dépasse 5,2 bars, de préférence 5,5 bars, et particulièrement préférablement plus de 6 bars.

4. Procédé selon la revendication 3, **caractérisé en ce que** la section transversale totale de toutes les ouvertures de sortie du tube de pulvérisation est inférieure à la section transversale de la conduite d'amenée.

5. Procédé selon l'une quelconque des revendications 3 ou 4, **caractérisé en ce que** les ouvertures de sortie présentent un diamètre inférieur à 3 mm, de préférence inférieur à 2 mm, particulièrement préférablement compris entre 1 et 1,5 mm.
